# EUROPÄISCHE PATENTSCHRIFT

(11) **EP 2 108 248 B1**
(45) Veröffentlichungstag und Bekanntmachung des Hinweises auf die Patenterteilung: **21.12.2011**
(21) Anmeldenummer: 09151016.4
(22) Anmeldetag: 21.01.2009
(51) Int. Cl.: A01F 29/10, A01D 43/08

(54) **Feldhäcksler und Einzugsvorrichtung für einen Feldhäcksler**
Chaff cutter and intake device for same
Ramasseuse-hacheuse et dispositif d'introduction pour une ramasseuse-hacheuse

(30) Priorität: 07.04.2008 DE 102008017734
(43) Veröffentlichungstag der Anmeldung: 14.10.2009
(73) Patentinhaber: CLAAS Selbstfahrende Erntemaschinen GmbH, 33428 Harsewinkel (DE)
(72) Erfinder: Weigelt, Dr., Horst, 33332, Gütersloh (DE)

(56) Entgegenhaltungen:
- EP-A- 1 790 210
- DE-A1- 19 539 143

## Beschreibung

Die Erfindung betrifft einen Feldhäcksler.

Feldhäcksler werden in der Landwirtschaft verwendet, um Erntegut mittels einer Erntegutaufnahmevorrichtung von einem Feld abzuschneiden, aufzusammeln und das Erntegut über eine Zuführ- bzw. Einzugsvorrichtung einer Häckseleinrichtung zuzuführen. In der Regel ist die Häckseleinrichtung als Häckseltrommel ausgeführt, die auf dem Umfang mit einer variablen Anzahl von typischerweise 20 bis etwa 50 Messern bestückt ist, um das Erntegut zu zerkleinern.

Die Schnittlänge des Häckselguts kann einerseits durch eine Veränderung der Trommeldrehzahl und andererseits beispielsweise auch durch die Einzugsgeschwindigkeit der Einzugsorgane verändert werden. So ergeben sich in Abhängigkeit von der Anzahl der Messer und der Rotationsgeschwindigkeit der Häckseltrommel unterschiedliche Schnittlängen des Häckselgutes.

Die richtige Schnittlänge des Erntegutes ist ein wichtiger Faktor bei der Wirtschaftlichkeit einer Häckselmaschine. Die Schnittlänge soll einerseits nur so kurz wie nötig sein, um bei der weiteren Verarbeitung oder der Verfütterung eine optimale Verwertung des Erntegutes zu erlauben und andererseits soll die Schnittlänge so lang wie möglich sein, um den Arbeitseinsatz und insbesondere den Kraftstoffbedarf so gering wie möglich zu halten.

So liegen typische Schnittlängen in Abhängigkeit von der Messerzahl und der Rotationsgeschwindigkeit zwischen etwa 4 und 42 mm Schnittlänge, können aber auch noch andere Werte annehmen.

Nach dem Häckseln wird das Häckselgut in der Regel mittels eines Gebläses, das auch Nachbeschleuniger genannt wird, durch einen in seiner Position verstellbaren Auswurfkrümmer auf ein Transportfahrzeug ausgetragen. Das Häckselgut aus den geernteten Pflanzen kann beispielsweise als Silage zum Verfüttern an Tiere oder auch zur Biogasproduktion verwendet werden.

Viele im Markt befindliche Feldhäcksler weisen an der Zuführeinrichtung bzw. der Einzugsvorrichtung zwei untere, starr am Rahmen gelagerte Einzugs- bzw. Vorpresswalzen und zwei mit diesen einen Spalt bildende obere Vorpresswalzen auf, wobei die oberen Vorpresswalzen gegen eine Vorbelastungskraft einer Feder höhenbeweglich gelagert sind, um entsprechend des aufgenommenen Erntegutes nach oben ausweichen zu können.

Dabei bewirken die Federn, dass die oberen Einzugs- bzw. Vorpresswalzen im Zusammenwirken mit den unteren Vorpresswalzen mit einer definierten Kraft beaufschlagt werden, damit das Erntegut beim Einzug vorverdichtet wird. Weiterhin wird mit Hilfe dieser Walzenkraft der Einzug des Erntegutes und dessen Transport zur Häckseltrommel bewirkt.

Im Weiteren fällt den Vorpresswalzen die Aufgabe zu, den Gutstrang während des Einzugs "festzuhalten", damit das Zuführen des Erntegutes kontinuierlich erfolgt, um einen störungsfreien Schneideprozess des Erntegutes an der Häckseltrommel zu gewährleisten. Außerdem wird dadurch im Regelfall die Einhaltung der vorab gewählten Schnittlänge erreicht.

Die Federkraft ist dabei in der Regel so voreingestellt, dass die Federn unterschiedliche Erntegutstrangdicken ausgleichen können und gleichzeitig eine Vorpresskraft aufrecht erhalten, welche für einen Normaldurchsatz optimiert ist.

Bei kleineren Erntegutmattenhöhen, die beispielsweise beim Ein- und Ausfahren aus dem Erntegutbestand auftreten, wie beispielsweise am Feldende oder beim Durchfahren von Bestandslücken kommt es zu einer zu geringen Vorpressung. Dies führt zu unerwünschten Überlängen beim Häckselprozess, da die Häckselmesser aufgrund der zu geringen Vorpressung Erntegutteile aus der Erntegutmatte herausziehen und ungeschnitten den weiteren Bearbeitungsorganen übergeben. Derartige Überlängen sind nachteilig, da sie einerseits zu Problemen bei der Silageerzeugung führen und bei der späteren Verfütterung von den Tieren zum Teil nicht aufgenommen werden, und andererseits bei der Biogasproduktion ebenfalls unerwünscht sind.

Zur Lösung dieses Problems ist in der DE 10 2005 059 953 vorgeschlagen worden, ein weiteres zusätzliches Druckelement vorzusehen, das die Erntegutmatte zusätzlich vorbelastet, um die Vorpressung der Erntegutmatte bis möglichst nahe an den Umfang der Häckseltrommel aufrecht zu erhalten. Nachteilig an der bekannten Ausgestaltung ist jedoch, dass das zusätzliche Druckelement zu einer weiteren Kostenerhöhung führt.

Weiterhin ist aus der EP 0 519 209 eine Vorrichtung bekannt geworden, die zur Vermeidung von Eigenschwingungszuständen der oberen Vorpresswalzen ein als hydraulischen Stoßdämpfer ausgebildetes Dämpfungsglied vorsieht, das mit dem durch Federkraft nach unten vorgespannten Vorpresswalzen verbunden ist. Bei einer sich sprunghaft ändernden Erntegutmattenhöhe erlaubt es die Trägheit des Dämpfungsglieds nicht, die Vorpresswalze hinreichend schnell bei sich schnell ändernden Mattenhöhen anzupassen, sodass auch hier unerwünschte Überlängen möglich sind.

Aus der EP 1 790 210 ist ein Feldhäcksler mit einer Einzugsvorrichtung bekannt, die obere und untere über ein Belastungsmittel gegeneinander vorbelastbare Einzugswalzen aufweist. Die Stärke des Anpressdrucks des Belastungsmittels lässt sich in Abhängigkeit von Erntegutparametern wie der Erntegutmattendicke, -feuchte oder -kompressibilität steuern.

Vor dem Hintergrund des beschriebenen Standes der Technik ist es eine Aufgabe der vorliegenden Erfindung, einen Feldhäcksler zur Verfügung zu stellen, womit unabhängig von der aktuell vorliegenden Mattenhöhe die eingestellte Schnittlänge besser eingehalten wird.

Diese Aufgabe wird gelöst durch einen Feldhäcksler mit den Merkmalen des Anspruchs 1. Bevorzugte Weiterbildungen der Erfindung sind Gegenstand der Unteransprüche. Weitere Vorteile und Merkmale der Erfindung ergeben sich aus dem Ausführungsbeispiel.

Der erfindungsgemäße selbstfahrende Feldhäcksler umfasst ein Gehäuse und wenigstens einen Antrieb, wenigstens eine Steuereinrichtung und eine Einzugsvorrichtung für zu häckselndes Gut. Die Einzugsvorrichtung umfasst wenigstens eine untere und wenigstens eine obere Einzugswalze, welche über wenigstens ein Belastungsmittel gegeneinander vorbelastbar sind. Dabei ist die Stärke des Anpressdruckes des wenigstens einen Belastungsmittels einstellbar und durch die Steuereinrichtung in Abhängigkeit von wenigstens einem Fahrparameter des Feldhäckslers steuerbar.

Der erfindungsgemäße selbstfahrende Feldhäcksler hat viele Vorteile. Mit dem erfindungsgemäßen Feldhäcksler wird auch bei sich ändernden Bedingungen bezüglich der Zufuhr des Erntegutes eine gleichbleibende Schnittlänge des Häckselgutes erreicht, da der Anpressdruck der Vorbelastungseinrichtung in Abhängigkeit von wenigstens einem Fahrparameter des Feldhäckslers steuerbar ist. Damit kann die Fahrsituation des Feldhäckslers berücksichtigt werden, sodass eine flexiblere und an die Situation angepasste Steuerung des Anpressdrucks möglich ist.

In einer bevorzugten Weiterbildunge weist die Einzugsvorrichtung eine Gehäuseeinrichtung auf, wobei die wenigstens eine untere Einzugswalze fest an der Gehäuseeinrichtung gelagert ist und die wenigstens eine obere Einzugswalze höhenverstellbar an der Gehäuseeinrichtung angeordnet ist. In Betrieb wird die wenigstens eine obere Einzugswalze durch wenigstens ein Belastungsmittel nach unten in Richtung auf die untere insbesondere feststehende Einzugswalze vorbelastet. Besonders bevorzugt sind wenigstens zwei untere und wenigstens zwei obere Einzugswalzen vorgesehen, wobei insbesondere die oberen zwei Einzugswalzen höhenverstellbar an der Gehäuseeinrichtung vorgesehen und durch das wenigstens eine Belastungsmittel nach unten in Richtung auf die unteren Einzugswalzen vorbelastet werden. Die Einzugswalzen können auch als Vorpresswalzen bezeichnet werden.

In allen Ausgestaltungen wird der Anpressdruck wenigstens eines Belastungsmittels wenigstens teilweise über ein hydraulisches System aufgebracht. Das ist sehr vorteilhaft, da ein hydraulisches System einfach und schnell einen höheren Druck aufbauen kann und somit zu einer schnellen Reaktion fähig ist. Neben einem hydraulischen System zur Aufbringung wenigstens eines Teiles des Anpressdruckes können auch weitere Belastungsmittel vorgesehen sein. Beispielsweise ist es möglich, dass eine, zwei, drei, vier oder mehr Federeinrichtungen vorgesehen sind, die beispielsweise einen Grundanpressdruck aufbringen, der zusätzlich durch das hydraulische System in Abhängigkeit von den aktuellen Bedingungen verstärkbar ist.

Vorzugsweise wird der Anpressdruck des Belastungsmittels wenigstens teilweise oder auch ganz über einen Hydrospeicher als Federelement aufgebracht. Ein Hydrospeicher bietet den Vorteil, dass eine Grundbelastung vorliegt und das Antriebsaggregat des hydraulischen Systems einen Zwischenspeicher für die Aufbringung des Anpressdruckes aufweist.

In vorteilhaften Ausgestaltungen wird der Anpressdruck des Belastungsmittels wenigstens teilweise direkt von einem Hydraulikzylinder aufgebracht, sodass auch eine direkte Koppelung des Belastungsmittels mit dem Hydraulikzylinder möglich ist. Vorzugsweise ist der Hydrospeicher von dem Hydraulikzylinder hydraulisch trennbar, um eine direkte hydraulische Verbindung von dem Hydraulikzylinder zu dem Belastungsmittel zu ermöglichen. Dadurch wird eine besonders schnelle Reaktion ermöglicht, da durch eine Erhöhung des hydraulischen Druckes durch den Hydraulikzylinder direkt eine entsprechende Erhöhung des Anpressdrucks durch das Belastungsmittel erfolgt. Das ist insbesondere vorteilhaft, wenn auf schlagartige Belastungsänderungen reagiert werden soll. Dies ist insbesondere der Fall, wenn der Feldhäcksler beispielsweise das Ende eines Feldes oder eine Bestandslücke erreicht. An diesen Positionen wird die Zufuhr des Gutes sehr schnell oder schlagartig reduziert, sodass eine schnelle Reaktion und eine entsprechend schnelle Erhöhung des Anpressdruckes sinnvoll oder erforderlich ist, um den Gutstrang definiert weiterzufördern und eine definierte Schnittlänge einzuhalten.

In allen Ausgestaltungen der Erfindung erfolgt die Anpassung des Anpressdruckes des Belastungsmittels vorzugsweise in Abhängigkeit von einer Fahrgeschwindigkeit bzw. einer Bewegungsgeschwindigkeit der Einzugsvorrichtung bzw. des Feldhäckslers, sodass als Fahrparameter die Fahrgeschwindigkeit des Feldhäckslers vorzugsweise verwendet wird. Möglich ist es ebenso, die Änderung der Fahrgeschwindigkeit als Fahrparameter zu verwenden, wobei insbesondere bei einer Fahrbeschleunigung der Anpressdruck entsprechend erhöht wird.

Sowohl die absolute Fahrgeschwindigkeit als auch die Änderung der Fahrgeschwindigkeit jeweils einzeln oder gemeinsam für die Einstellung des Anpressdruckes zu verwenden, bietet erhebliche Vorteile, da der Feldhäcksler an einem Feldende oder an einer Bestandslücke die Geschwindigkeit im Regelfall erhöht, um beispielsweise mit höherer Fahrgeschwindigkeit zu dem nächsten Feldbeginn zu gelangen. Hier wird dann der Anpressdruck erhöht, sodass trotz geringer werdender Gutstrangdicke die Schnittlänge des Häckselgutes gleich bleibt oder sich nur geringfügig ändert. Der Aufwand für diese Maßnahme ist gering, da zur Erfassung des Fahrparameters bei einem Feldhäcksler kein zusätzlicher Sensor benötigt wird. Dieser steht regelmäßig schon zur Verfügung und kann von der Steuereinrichtung verwendet werden, um den Anpressdruck des Belastungsmittels oder der Belastungsmittel entsprechend anzupassen.

Möglich ist es auch, dass der Anpressdruck erhöht wird, wenn die Fahrgeschwindigkeit unter einen vorbestimmten Wert sinkt. Das kann beispielsweise der Fall sein, wenn der Feldhäcksler am Ende des Feldes dreht. An solchen Stellen überstreicht der Feldhäcksler oftmals eine teilweise schon zuvor abgearbeitete Erntefläche, sodass die Zufuhr des Erntegutes zu der Häckseltrommel reduziert wird.

In einer weiteren bevorzugten Ausgestaltung wird als wenigstens ein Fahrparameter ein Radeinschlag verwendet. Setzt der Feldhäcksler beispielsweise zu einem Wendemanöver an, welches insbesondere am Feldende stattfindet, so kann ein Radeinschlag, der über ein vorbestimmtes Maß hinausgeht, als Fahrparameter herangezogen werden. Beim Überschreiten eines vorbestimmten Lenkradeinschlags bzw. Radeinschlags wird der Anpressdruck beispielsweise erhöht, um den geänderten Bedingungen Rechnung zu tragen.

In allen Ausgestaltungen ist es möglich als Fahrparameter auch einen GPS-Sensor (Global Positioning System) einzusetzen und in Abhängigkeit von dem Signal oder einer Signalfolge den Anpressdruck des Belastungsmittels oder der Belastungsmittel anzupassen. Beispielsweise kann aus zeitlichen beabstandeten GPS-Signalen die Geschwindigkeit und auch eine Geschwindigkeitsänderung der Einzugsvorrichtung bzw. des Feldhäckslers ermittelt werden.

Möglich ist es aber auch, dass die GPS-Signale verwendet werden, um anhand vordefinierter Karten Bestandslücken auszuwerten und zu berücksichtigen. Beispielsweise können solche Karten anhand von Luftbildern erstellt werden oder anhand vorbekannter Daten zur Verfügung stehen. In Abhängigkeit von der erfassten Position und des in einem Speicher der Steuereinrichtung vorhandenen Kartenmaterials wird der Anpressdruck des Belastungsmittels entsprechend "vorausschauend" gesteuert, sodass schon vor Erreichen einer Bestandslücke der Anpressdruck entsprechend erhöht wird, um Reaktionszeiten des hydraulischen Systems und im Übertragungssystem des Anpressdruckes entsprechend auszugleichen. So wird bei Erreichen einer Bestandslücke der vorgesehene Anpressdruck im vorhinein oder genau passend aufgebaut.

In allen Ausgestaltungen ist es bevorzugt, wenigstens eine Sensoreinrichtung vorzusehen, die ein Maß für eine Gutmattendicke des Erntegutes erfasst. Vorzugsweise wird der Anpressdruck des Anpressmittels wenigstens teilweise in Abhängigkeit von der erfassten Gutmattendicke eingestellt.

In allen Ausgestaltungen umfasst der Feldhäcksler vorzugsweise ein Fahrgestell und eine Mehrzahl von Rädern, sowie insbesondere eine Häckseleinrichtung, die insbesondere als Häckseltrommel ausgeführt sein kann. Aus der Bewegung der Räder oder mittels eines sonstigen Ortsensors wird auf die Bewegung des Feldhäckslers geschlossen und daraus wird ein Fahrparameter abgeleitet, der zur Einstellung des Anpressdruckes verwendet wird.

Vorzugsweise wird als Fahrparameter eine Fahrgeschwindigkeit des Feldhäckslers und/oder eine Fahrbeschleunigung abgeleitet, um den Anpressdruck in Abhängigkeit von der Fahrgeschwindigkeit und/oder der Beschleunigung des Feldhäckslers zu steuern.

In allen Ausgestaltungen kann der Feldhäcksler Mittel aufweisen, mit denen das Feldende und/oder Bestandslücken vor Erreichen des Feldenendes oder der Bestandslücke erfassbar ist. Dadurch kann der Anpressdruck des Belastungsmittels mittels der Steuereinrichtung entsprechend frühzeitig erhöht werden, sodass bei Erreichen des Feldendes oder der Bestandslücke ein entsprechend vorgesehener Anpressdruck vorliegt. Dadurch werden bedarfsgerechte Anpassungen des Anpressdruckes ermöglicht.

Als Mittel zur Erfassung des Feldendes oder einer Bestandslücke eignet sich insbesondere ein optisches Erkennungssystem, welches beispielsweise auf die Höhe des Erntegutes reagiert. Wenn das Feldende erreicht wird, wird mittels des optischen oder auch akustischen Erkennungssystems detektiert, dass dort ein Feldende oder eine Freifläche vorliegt, sodass mit entsprechendem Vorlauf der Anpressdruck angepasst werden kann.

Möglich ist es auch, dass auf GPS-Sensordaten und vorgespeicherte Karten oder Parameter zurückgegriffen wird, um bei entsprechend markierten Gebieten oder Stellen den Anpressdruck entsprechend frühzeitig zu erhöhen.

Bevorzugt ist es auch, dass in einer Speichereinrichtung zuvor gefahrene Fahrten des Feldhäckslers abgespeichert sind, um bei nachfolgenden Fahrten den Feldhäcksler und den Anpressdruck des Belastungsmittels vordefiniert zu steuern. Eine solche Steuerung kann insbesondere nicht nur an geraden Fahrabschnitten erfolgen, sondern auch an den Wendepunkten des Feldhäckslers am jeweiligen Feldende. Das kann auch Bestandteil eines an sich bekannten Feldendemanagementsystems sein, das auf einem Häcksler vorhanden sein kann.

In weiteren Ausgestaltungen können weitere Sensoreinrichtungen vorgesehen sein, die die Anwesenheit von metallischen Gegenständen im Erntegut erfassen und für einen frühzeitigen Stop der Häckseleinrichtung sorgen, um Beschädigungen an der Häckseltrommel und/oder den Einzugswalzen zu vermeiden.

Wenigstens eine Einzugswalze kann mit austauschbaren glatten Leisten oder Zahnleisten ausgerüstet werden, um bei dem Verschleiß der Zahnleiste oder der glatten Leiste einen Austausch zu ermöglichen. Möglich und sinnvoll ist ein Austausch gegebenenfalls auch bei unterschiedlichen zu häckselnden Materialien.

Vorzugsweise ist wenigstens ein Überlastsensor vorgesehen, der bei einer Überschreitung zuvor definierter Belastungen ein Überlastsignal auslöst, woraufhin die Anlage vorzugsweise gestoppt wird.

Vorteilhafterweise wird ebenfalls eine Aufstiegsgeschwindigkeit wenigstens einer Vorpresswalze bzw. Einzugswalze erfasst, um beispielsweise bei dem Einziehen von Steinen oder anderen Fremdkörpern eine zuverlässige Abschaltung des Feldhäckslers zu gewährleisten.

Weitere Merkmale und vorteilhafte Ausgestaltungen der Erfindung werden im folgenden Ausführungsbeispiel angegeben, dass mit Bezug auf die beiliegenden Figuren im Folgenden beschrieben wird.

In den Figuren zeigen:
- Figur 1: einen Feldhäcksler in einer teilweise geschnittenen Seitenansicht;
- Figur 2: den schematischen Verlauf des Anpressdruckes und der Fahrgeschwindig- keit über der Zeit; und
- Figur 3: eine schematische Darstellung des hydraulischen Systems.

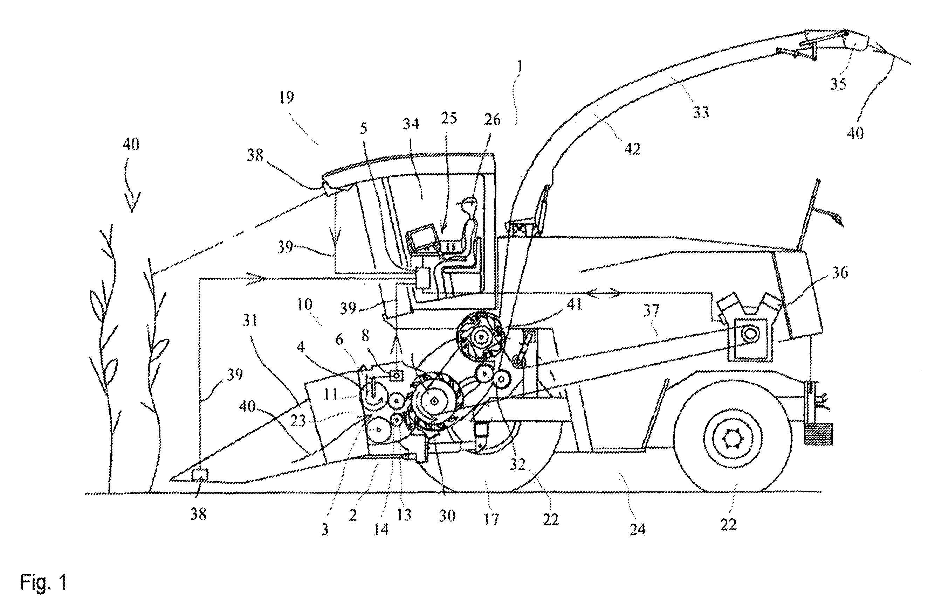

Mit Bezug auf die Figuren 1 bis 3 wird im Folgenden ein Ausführungsbeispiel der vorliegenden Erfindung beschrieben.

Der in Figur 1 in einer teilweise geschnittenen Seitenansicht dargestellte Feldhäcksler 1 weist ein Gehäuse 19 und ein Fahrgestell 24 auf, an dem die Räder 22 angeordnet sind. Ein Motor 36 dient als Antrieb, der über einen Riemen 37 mit den Arbeitsorganen des Feldhäckslers 1 in Verbindung steht.

Das zu erntende Erntegut 40 wird über ein Vorsatzgerät 31 geschnitten und aufgenommen. In Anschluss an das Vorsatzgerät 31 ist die Einzugsvorrichtung 10 vorgesehen, welche hier im Ausführungsbeispiel über zwei untere Einzugs- bzw. Vorpresswalzen 3, 13 und zwei obere Einzugs- bzw. Vorpresswalzen 4, 14 verfügt, die an einem Rahmen oder Gehäuse 2 angeordnet sind.

Die Einzugs- und Vorpresswalzen 3, 13 und 4, 14 werden durch Belastungsmittel 6 aufeinander vorbelastet, um jederzeit einen ausreichenden Anpressdruck 7 auf die sich durch die Einzugswalzen hindurch bewegende Gutmatte auszuüben, sodass nicht einzelne Streifen aus dem Erntegut 40 von der sich im Anschluss an die Einzugsvorrichtung 10 befindende Häckseltrommel 30 herausgezogen und nahezu unzerkleinert weiter transportiert werden.

Um eine definierte Schnittlänge zu gewährleisten werden bei dem Feldhäcksler 1 auf dem Weg des Ernteguts 40 durch die Maschine laufend die Vortriebsgeschwindigkeiten erhöht. Das bedeutet, dass die Vorpress- und Einzugswalzen 3, 13; 4, 14 mit einer geringeren Umfangsgeschwindigkeit angetrieben werden als die Häckseltrommel 30, die wiederum mit einer geringeren Umfangsgeschwindigkeit als die Nachzerkleinerungseinrichtung 32 betrieben wird. Der Nachbeschleuniger 41 transportiert das zu befördende Erntegut 40 durch den Förderschacht 42 und durch den Auswurf 33 und an der Auswurfkrümmerklappe 35 vorbei hinaus auf einen benachbart zu dem Feldhäcksler 1 angeordneten und hier nicht dargestellten Transportwagen, der das geerntete und bearbeitete Erntegut 40 abtransportiert.

Der Feldhäcksler verfügt über eine Fahrzeugkabine 34, die Platz für einen Betreiber 26 und gegebenenfalls einen Mitfahrer bietet. Eine Bedien- und Ausgabeeinheit 25 steht dem Betreiber 26 zur Verfügung, um die Betriebseinstellungen zu ändern, und um den Betreiber 26 über die aktuellen Bedingungen zu informieren.

Eine Steuereinrichtung 5 dient zur Steuerung des Feldhäckslers 1 und/oder der Einzugsvorrichtung 10. Die Steuereinrichtung 5 kann mit einem oder mehreren Sensoren 38 über Leitungen 39 verbunden sein, um den Feldhäcksler 1 insgesamt und die Einzugsvorrichtung 10 entsprechend zu steuern.

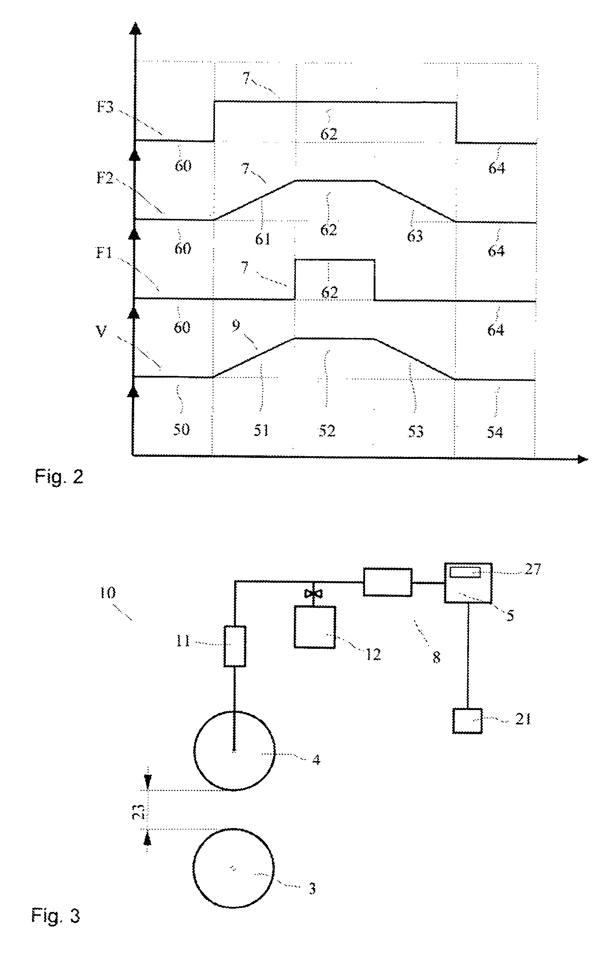

Die Einzugsvorrichtung 10 und insbesondere der Anpressdruck 7 des Belastungsmittels 6, welches hier über ein hydraulisches System 8 verfügt wird von der Steuereinrichtung 5 gesteuert, wobei wenigstens ein Fahrparameter 9 berücksichtigt wird. Das bedeutet hier, dass der Hydraulikzylinder 11 des hydraulischen Systems 8 einen erhöhten Anpressdruck 7 von den oberen Einzugswalzen 4, 14 auf die unteren Einzugswalzen 3, 13 aufbringt, wenn die Fahrgeschwindigkeit von einer ersten Geschwindigkeit 50 beispielsweise auf eine zweite Geschwindigkeit 52 ansteigt (vgl. die Figur 2).

Im Regelfall beschleunigt der Bediener 26 den Feldhäcksler 1, wenn er das Feldende erreicht und auf ein anderes Feld wechselt oder auch wenn eine Bestandslücke durchfahren wird. Dann tritt der Fall auf, dass die Gutmattendicke 23 abnimmt, da weniger Erntegut 40 der Häckseltrommel 30 zugeführt wird. Auf Grund des dann relativ gesehenen zu geringen Anpressdruckes 7 kann es vorkommen, dass die Häckseltrommel 30 einzelne Stücke des Ernteguts 40 aus dem Gutstrang herauszieht und somit unzerkleinert durch den Förderschacht 42 abtransportiert.

Als Lösung für dieses Problem wird hier über die Steuereinrichtung 5 ein Maß für die Fahrgeschwindigkeit V des Feldhäckslers 1 ermittelt und der Anpressdruck 7 des hydraulischen Systems 8 wird in Abhängigkeit von dem aus der Geschwindigkeit V ermittelten Fahrparameter 9 angepasst.

Das bedeutet, dass der Anpressdruck 7 beispielsweise einen der in Figur 2 dargestellten Anpressdruckverläufe F1 bis F3 annehmen kann.

Wenn beispielsweise der Feldhäcksler 1 zunächst - wie in Fig. 2 dargestellt - mit einer konstanten Geschwindigkeit 50 fährt, so kann der Anpressdruck 7 ein konstantes Niveau 60 aufweisen. Wenn der Feldhäcksler 1 anschließend gemäß der Geschwindigkeitskurve 51 beschleunigt, kann der Beschleunigungsvorgang als Fahrparameter 9 neu ausgewertet werden und als Reaktion darauf der Anpressdruck 9 verändert werden.

Bei dem Anpressdruckverlauf F1 wird der Anpressdruck 7 erst erhöht, wenn der Feldhäcksler 1 die Geschwindigkeit 52 erreicht hat. Unterhalb dieser Schwelle bleibt ein erster Anpressdruck 60 etwa konstant. Wenn der Feldhäcksler 1 nach dem Passieren z.B. einer Bestandslücke wieder ein Feldstück mit normalem Erntegutbestand bearbeitet, reduziert der Fahrer die Geschwindigkeit wieder auf die normale Erntegeschwindigkeit 54, die im Regelfall der zuvor gefahrenen Geschwindigkeit 50 entspricht. Bei dem Anpressdruckverlauf F1 wird sofort beim Unterschreiten der Grenzgeschwindigkeit 52 der Anpressdruck 62 auf den Anpressdruck 64 gesenkt, der im Regelfall wiederum dem Anpressdruck 60 entspricht.

In einer alternativen Ausgestaltung wird der Anpressdruck gemäß dem Anpressdruckverlauf F2 variiert. Demnach wird bei der Fahrgeschwindigkeit 50 zunächst der Anpressdruck 60 erzeugt, wobei hier während der ansteigenden Kurve der Fahrgeschwindigkeit 51 der Anpressdruck entsprechend gleichzeitig gemäß dem Kurvenverlauf 61 angepasst wird bis die höhere Geschwindigkeit 52 und der entsprechende höhere Anpressdruck 62 erreicht wird. Bei Reduktion der Fahrgeschwindigkeit gemäß Kurve 53 wird beim Anpressdruckverlauf F2 der Anpressdruck gemäß Kurve 63 proportional reduziert, bis der normale Anpressdruck 64 erreicht wird, der bei der normalen Erntegeschwindigkeit vorliegt. Bei dieser Variante wird zusätzlich zu der absoluten Fahrgeschwindigkeit auch die Beschleunigung des Feldhäckslers 1 berücksichtigt.

Gemäß einem dritten Anpressdruckverlauf F3 wird der Anpressdruck 9 von dem normalen Anpressdruck 60 auf den erhöhten Anpressdruck 62 verbracht, sobald der Feldhäcksler 1 aus der normalen Erntegeschwindigkeit 50 heraus beschleunigt. Das bedeutet, dass schon beim Beschleunigen gemäß der Fahrgeschwindigkeitskurve 51 der Anpressdruck sofort auf den Anpressdruck 62 erhöht wird und dort verbleibt, bis der Feldhäcksler 1 wieder die normale Fahrgeschwindigkeit 54 erreicht hat. Um eine ständige Druckänderung zu vermeiden, können geeignete Grenzwerte und Schwellwerte vorgesehen sein.

Insgesamt ist es sowohl möglich, bei einem Überschreiten einer bestimmten Grenzgeschwindigkeit den Druck schlagartig auf ein vorbestimmtes zweites Maß zu erhöhen, oder aber der Anpressdruck 9 wird proportional zur Geschwindigkeitszunahme erhöht.

Um ein "vorausschauendes" Verhalten zu erreichen, ist es sinnvoll, wenn schon bei einer Beschleunigung der Anpressdruck 9 auf den Wert 62 erhöht wird oder wenigstens proportional gemäß Kurve 61 erhöht wird. Das führt dazu, dass schon bei geringen Geschwindigkeitsänderungen der Anpressdruck erhöht wird, sodass bei Verlassen des Feldes schon ein erhöhter Druck vorliegt, auch wenn für die Druckanpassung ein gewisser Zeitraum benötigt wird.

Fig. 3 zeigt einen prinzipiellen Aufbau des hydraulischen Systems 8 und zweier Einzugswalzen 3 und 4.

In allen Ausgestaltungen ist es möglich, dass ein Hydrospeicher 12 oder Druckspeicher in dem hydraulischen System 8 eingesetzt wird, der für gleichbleibende Bedingungen bei schwankenden Eingangsgrößen sorgt. Falls es nötig werden sollte, den Anpressdruck 9 in kurzer Zeit stark zu erhöhen, kann der Hydrospeicher 12 von dem hydraulischen Kreislauf entkoppelt werden, wodurch eine schnellere Reaktionsfähigkeit des hydraulischen Systems 8 gewährleistet wird.

Als ein weiterer möglicher Fahrparameter 9 kann die Stellung der Räder 22 und insbesondere der Vorderräder des Feldhäckslers 1 ausgewertet werden. Dazu kann der Radeinschlag 17 verwendet werden. Ab einer vorbestimmten Winkelstellung der Räder 22 kann der Anpressdruck 7 erhöht werden, damit bei Wendemanövern am Feldende, wenn weniger Erntegut zugeführt wird, der dann erforderliche höhere Anpressdruck aufrecht erhalten bleibt. Bei kleineren Lenkbewegungen kann hingegen der Anpressdruck 7 konstant auf geringem Niveau verbleiben.

Zusätzlich oder alternativ dazu kann das Signal eines GPS-Sensors 21 verwendet werden, der über eine Leitung 39 mit der Steuereinrichtung 5 verbunden ist und dessen Signale ebenfalls ausgewertet werden können, um beispielsweise die Geschwindigkeit oder die Beschleunigung des Feldhäckslers 1 zu ermitteln. Außerdem ist es mit Hilfe eines GPS-Sensors 21 möglich anhand der in einer Speichereinrichtung 27 der Steuereinrichtung 5 abgelegten Daten das Belastungsmittel 6 derart zu steuern, dass an vorbestimmten Stellen der Anpressdruck 7 erhöht wird, beispielsweise wenn das Feldende erreicht wird.

Möglich ist es auch, dass in der Speichereinrichtung 27 abgelegte Daten von historischen Erntevorgängen ausgewertet werden und in Abhängigkeit davon die aktuellen Parameter entsprechend verändert werden.

In allen Ausgestaltungen ist es möglich, dass beispielsweise ein Metalldetektor als Sensor 38 eingesetzt wird, um Metallteile im Erntegut zu detektieren, bevor sie zu der Häckseltrommel 30 gelangen. Ebenso kann ein Detektor vorgesehen sein, der beispielsweise eine relative Positionsänderung der unteren und oberen Einzugswalzen 3, 4 zueinander erfasst und bei Überschreiten eines vorbestimmten Maßes die Häckselvorrichtung stoppt.

Ebenfalls ist der Einsatz von als optischen Sensoren ausgeführte Sensoren 38 möglich, mit denen das Ende des Feldes oder Bestandslücken erfassbar sind, um entsprechend den Anpressdruck 7 des hydraulischen Systems 8 zu erhöhen.

Insgesamt wird mit dem erfindungsgemäßen Feldhäcksler 1 ein Gutflussmanagement ermöglicht, welches unabhängig von den Feldgrenzen und von Bestandslücken eine höhere Konstanz der Schnittlänge des Ernteguts 40 erlaubt, wobei der Aufwand zur Realisierung relativ gering ist.

### Bezugszeichenliste:

- 1: Feldhäcksler
- 2: Gehäuseeinrichtung
- 3: untere Einzugswalze
- 4: obere Einzugswalze
- 5: Steuereinrichtung
- 6: Belastungsmittel
- 7: Anpressdruck
- 8: Hydraulisches System
- 9: Fahrparameter
- 10: Einzugsvorrichtung
- 11: Hydraulikzylinder
- 12: Hydrospeicher
- 13: untere Einzugswalze
- 14: obere Einzugswalze
- 17: Radeinschlag
- 19: Gehäuse
- 21: GPS-Sensor
- 22: Rad
- 23: Gutmattendicke
- 24: Fahrgestell
- 25: Bedieneinheit
- 26: Betreiber
- 27: Speichereinrichtung
- 30: Häckseltrommel
- 31: Vorsatzgerät
- 32: Nachzerkleinerungseinrichtung
- 33: Auswurfkrümmer
- 34: Fahrzeugkabine
- 35: Auswurfkrümmerklappe
- 36: Antriebsmotor
- 37: Antriebsriemen
- 38: Sensor
- 39: Leitung
- 40: Erntegut
- 41: Nachbeschleuniger
- 42: Förderschacht
- 50-54: Geschwindigkeit
- 60-64: Anpressdruck
- F1, F2, F3: Druckverläufe
- V: Geschwindigkeitsverlauf

## Patentansprüche

1. Selbstfahrender Feldhäcksler (1) mit einem Gehäuse (19), wenigstens einem Antrieb (36), einer Steuereinrichtung (5) und mit einer Einzugsvorrichtung (10) für zu häckselndes Gut, wobei die Einzugsvorrichtung (10) wenigstens eine untere und wenigstens eine obere Einzugswalze (3, 13; 4, 14) umfasst, welche über wenigstens ein Belastungsmittel (6) gegeneinander vorbelastbar sind, **dadurch gekennzeichnet, dass** die Stärke des Anpressdruckes (7) des Belastungsmittels (6) einstellbar ist und durch die Steuereinrichtung (5) in Abhängigkeit von wenigstens einem Fahrparameter (9) des Feldhäckslers (1) steuerbar ist.

2. Selbstfahrender Feldhäcksler nach Anspruch 1, wobei die Einzugsvorrichtung (10) eine Gehäuseeinrichtung (2) aufweist und die wenigstens eine untere Einzugswalze (3, 13) fest an der Gehäuseeinrichtung (2) gelagert ist, während die wenigstens eine obere Einzugswalze (4, 14) höhenverstellbar angeordnet ist und im Betrieb durch das wenigstens eine Belastungsmittel (6) nach unten in Richtung auf die untere Einzugswalze (3, 13) vorbelastet wird.

3. Selbstfahrender Feldhäcksler nach Anspruch 1 oder 2, wobei wenigstens zwei untere und wenigstens zwei obere Einzugwalzen (3, 13; 4, 14) vorgesehen sind.

4. Selbstfahrender Feldhäcksler nach einem der vorhergehenden Ansprüche, wobei der Anpressdruck (7) des Belastungsmittels (6) wenigstens teilweise über ein hydraulisches System (8) aufgebracht wird.

5. Selbstfahrender Feldhäcksler nach dem vorhergehenden Anspruch, wobei der Anpressdruck (7) des Belastungsmittels (6) wenigstens teilweise über einen Hydrospeicher (12) als Federelement aufbringbar ist.

6. Selbstfahrender Feldhäcksler nach einem der vorhergehenden Ansprüche, wobei der Anpressdruck (7) des Belastungsmittels (6) wenigstens teilweise direkt von einem Hydraulikzylinder (11) aufbringbar ist, wozu der Hydrospeicher (12) von dem Hydraulikzylinder (11) hydraulisch getrennt wird, um eine schnellere Erhöhung des Anpressdrucks (7) zu erzielen.

7. Selbstfahrender Feldhäcksler nach einem der vorhergehenden Ansprüche, wobei der Anpressdruck (7) des Belastungsmittels (6) in Abhängigkeit von einer Fahrgeschwindigkeit (V) und/oder einer Fahrbeschleunigung eingestellt und insbesondere mit zunehmender Fahrgeschwindigkeit (V) erhöht wird.

8. Selbstfahrender Feldhäcksler nach einem der vorhergehenden Ansprüche, wobei der Anpressdruck (7) des Belastungsmittels (6) in Abhängigkeit von einem Radeinschlag (17) eingestellt wird.

9. Selbstfahrender Feldhäcksler nach einem der vorhergehenden Ansprüche, wobei der Anpressdruck (7) des Belastungsmittels (6) in Abhängigkeit von einem Positionssignal, insbesondere einem GPS-Sensor (21) gesteuert wird.

10. Selbstfahrender Feldhäcksler nach einem der vorhergehenden Ansprüche, wobei der Anpressdruck (7) des Belastungsmittels (6) in Abhängigkeit von wenigstens einem Gutparameter wie Gutart (40) und Feuchte des Gutes einstellbar ist.

11. Selbstfahrender Feldhäcksler nach einem der vorhergehenden Ansprüche, wobei der Anpressdruck (7) des Belastungsmittels (6) in Abhängigkeit von einer Gutmattendicke (23) einstellbar ist, welche über eine Sensoreinrichtung (38) erfassbar ist.

12. Selbstfahrender Feldhäcksler (1) nach einem der vorigen Ansprüche, welcher ein Fahrgestell (24) und eine Mehrzahl von Rädern (22) umfasst, aus deren Bewegung wenigstens ein Fahrparameter (9) abgeleitet wird.

13. Selbstfahrender Feldhäcksler nach einem der vorigen Ansprüche, wobei Mittel (38) vorhanden sind, mit denen das Feldende und/oder Bestandslücken vor Erreichen derselben erfassbar sind, um mittels der Steuereinrichtung (5) den Anpressdruck (7) des Belastungsmittels (6) frühzeitig zu erhöhen.

14. Selbstfahrender Feldhäcksler nach einem der vorigen Ansprüche, wobei eine Speichereinrichtung (27) vorgesehen ist, in der zuvor gespeicherte Fahrten abspeicherbar sind, um nachfolgende Fahrten mittels der Steuereinrichtung (5) angepasst zu steuern.

## Claims

1. A self-propelled forage harvester (1) comprising a housing (19), at least one drive (36), a control device (5) and an intake device (10) for material to be chopped, wherein the intake device (10) includes at least one lower and at least one upper intake roller (3, 13; 4, 14) which can be preloaded relative to each other by way of at least one loading means (6),
**characterised in that** the strength of the pressing pressure (7) of the loading means (6) is adjustable and is controllable by the control device (5) in dependence on at least one travel parameter (9) of the forage harvester (1).

2. A self-propelled forage harvester according to claim 1 wherein the intake device (10) has a housing device (2) and the at least one lower intake roller (3, 13) is mounted fixedly to the housing device (2) while the at least one upper intake roller (4, 14) is arranged adjustably in respect of height and is preloaded in operation downwardly in the direction towards the lower intake roller (3, 13) by the at least one loading means (6).

3. A self-propelled forage harvester according to claim 1 or claim 2 wherein there are provided at least two lower and at least two upper intake rollers (3, 13; 4, 14).

4. A self-propelled forage harvester according to one of the preceding claims wherein the pressing pressure (7) of the loading means (6) is applied at least partially by way of a hydraulic system (8).

5. A self-propelled forage harvester according to the preceding claim wherein the pressing pressure (7) of the loading means (8) can be applied at least partially by way of a hydraulic storage means (12) in the form of a spring element.

6. A self-propelled forage harvester according to one of the preceding claims wherein the pressing pressure (7) of the loading means (6) can be applied at least partially directly by a hydraulic cylinder (11), for which purpose the hydraulic storage means (12) is hydraulically separated from the hydraulic cylinder (11) to achieve a faster increase in the pressing pressure (7).

7. A self-propelled forage harvester according to one of the preceding claims wherein the pressing pressure (7) of the loading means (6) is adjusted in dependence on a travel speed (V) and/or a travel acceleration and is increased in particular with increasing travel speed (V).

8. A self-propelled forage harvester according to one of the preceding claims wherein the pressing pressure (7) of the loading means (6) is adjusted in dependence on a wheel steering lock (17).

9. A self-propelled forage harvester according to one of the preceding claims wherein the pressing pressure (7) of the loading means (6) is controlled in dependence on a position signal, in particular a GPS sensor (21).

10. A self-propelled forage harvester according to one of the preceding claims wherein the pressing pressure (7) of the loading means (6) is adjustable in dependence on at least one material parameter such as kind of material (40) and moisture content of the material.

11. A self-propelled forage harvester according to one of the preceding claims wherein the pressing pressure (7) of the loading means (6) is adjustable in dependence on a material mat thickness (23) which can be detected by way of a sensor device (38).

12. A self-propelled forage harvester (1) according to one of the preceding claims which includes a chassis (24) and a plurality of wheels (22), from the movement of which at least one travel parameter (9) is deduced.

13. A self-propelled forage harvester according to one of the preceding claims wherein there are provided means (38) with which the end of the field and/or crop stand gaps can be detected before reaching same in order to increase the pressing pressure (7) of the loading means (6) by means of the control device (5) in good time.

14. A self-propelled forage harvester according to one of the preceding claims wherein there is provided a storage means (27) in which previously stored travel routes can be stored to control subsequent travel routes in adapted relationship by means of the control device (5).

## Revendications

1. Ramasseuse-hacheuse automotrice (1) comportant une cabine (19), au moins un entraînement (36), un dispositif de commande (5) et un dispositif d'alimentation (10) pour le produit à hacher, le dispositif d'alimentation (10) comprenant au moins un rouleau d'alimentation inférieur et au moins un rouleau d'alimentation supérieur (3, 13 ; 4, 14), lesquels peuvent être précontraints l'un contre l'autre par le biais d'au moins un moyen de contrainte (6), **caractérisée en ce que** la puissance de la pression d'appui (7) du moyen de contrainte (6) est ajustable et peut être commandée par le dispositif de commande (5) en fonction d'au moins un paramètre de marche (9) de la ramasseuse-hacheuse (1).

2. Ramasseuse-hacheuse automotrice selon la revendication 1, dans laquelle le dispositif d'alimentation (10) présente un dispositif de logement (2) et l'au moins un rouleau d'alimentation inférieur (3, 13) est fixé à demeure sur le dispositif de logement (2), tandis que l'au moins un rouleau d'alimentation supérieur (4, 14) est disposé de manière à pouvoir être réglé en hauteur et est précontraint pendant l'exploitation par l'au moins un moyen de contrainte (6) vers le bas en direction du rouleau d'alimentation inférieur (3, 13).

3. Ramasseuse-hacheuse selon la revendication 1 ou 2, dans laquelle au moins deux rouleaux d'alimentation inférieurs et au moins deux rouleaux d'alimentation supérieurs (3, 13 ; 4, 14) sont prévus.

4. Ramasseuse-hacheuse selon l'une des revendications précédentes, dans laquelle la pression d'appui (7) du moyen de contrainte (6) est appliquée au moins en partie par le biais d'un système hydraulique (8).

5. Ramasseuse-hacheuse selon l'une des revendications précédentes, dans laquelle la pression d'appui (7) du moyen de contrainte (6) peut être appliquée au moins en partie par le biais d'un accumulateur hydraulique (12) en tant qu'élément ressort.

6. Ramasseuse-hacheuse selon l'une des revendications précédentes, dans laquelle la pression d'appui (7) du moyen de contrainte (6) peut être appliquée au moins en partie directement par un vérin hydraulique (11), moyennant quoi l'accumulateur hydraulique (12) est séparé de manière hydraulique du vérin hydraulique (11) afin d'obtenir une augmentation plus rapide de la pression d'appui (7).

7. Ramasseuse-hacheuse selon l'une des revendications précédentes, dans laquelle la pression d'appui (7) du moyen de contrainte (6) est ajustée en fonction d'une vitesse de marche (V) et/ou d'une accélération de marche et en particulier est augmentée avec l'augmentation de la vitesse de marche (V).

8. Ramasseuse-hacheuse selon l'une des revendications précédentes, dans laquelle la pression d'appui (7) du moyen de contrainte (6) est ajustée en fonction d'un braquage de roues (17).

9. Ramasseuse-hacheuse selon l'une des revendications précédentes, dans laquelle la pression d'appui (7) du moyen de contrainte (6) est commandée par un signal de position, en particulier un capteur GPS (21).

10. Ramasseuse-hacheuse selon l'une des revendications précédentes, dans laquelle la pression d'appui (7) du moyen de contrainte (6) est ajustable en fonction d'au moins un paramètre de produit comme le type de produit (40) et l'humidité du produit.

11. Ramasseuse-hacheuse selon l'une des revendications précédentes, dans laquelle la pression d'appui (7) du moyen de contrainte (6) est ajustable en fonction d'une épaisseur de recouvrement de produit (23), laquelle est détectable par le biais d'un dispositif de détection (38).

12. Ramasseuse-hacheuse selon l'une des revendications précédentes, qui comprend un châssis (24) et une pluralité de roues (22), dont le déplacement découle d'au moins un paramètre de marche (9).

13. Ramasseuse-hacheuse selon l'une des revendications précédentes, dans laquelle des moyens (38) sont présents, avec lesquels la fin d'un champ et/ou des espaces vides sont détectables avant d'être atteints afin d'augmenter la pression d'appui (7) du moyen de contrainte (6) de manière précoce au moyen du dispositif de commande (5).

14. Ramasseuse-hacheuse selon l'une des revendications précédentes, dans laquelle un dispositif d'enregistrement (27) est prévu, dans laquelle les parcours précédemment enregistrés peuvent être sauvegardés pour commander de manière adaptée les parcours suivants au moyen du dispositif de commande (5).
